Europäisches Patentamt

European Patent Office

Office européen des brevets

(11) Publication number: **0 030 045**
**B1**

(12) **EUROPEAN PATENT SPECIFICATION**

(45) Date of publication of patent specification: **30.05.84**

(51) Int. Cl.³: **A 01 C 3/06**

(21) Application number: **80201018.1**

(22) Date of filing: **27.10.80**

(54) **Throwing rotor for manure spreading trucks in general.**

(30) Priority: **30.11.79 ITU 3492079**

(43) Date of publication of application:
**10.06.81 Bulletin 81/23**

(45) Publication of the grant of the patent:
**30.05.84 Bulletin 84/22**

(84) Designated Contracting States:
**AT BE CH DE FR GB LI LU NL SE**

(56) References cited:
**GB-A-1 205 135**
**US-A-2 296 474**
**US-A-2 883 196**

(73) Proprietor: **D.B.D. S.p.A.**
**I-46020 Torricella di Motteggiana (Mantova) (IT)**

(72) Inventor: **Fontana, Renato**
**16, Via Mario Grisendi**
**I-42020 S. Polo d'Enza (IT)**
Inventor: **Carlini, Franco**
**9, Via Leonello d'Este**
**I-42027 Montecchio Emilia (IT)**

(74) Representative: **Corradini, Corrado**
**STUDIO SECCHI & CORRADINI 4, Via Dante**
**Alighieri**
**I-42100 Reggio Emilia (IT)**

Courier Press, Leamington Spa, England.

## Description

The invention relates to an improved rotor which is suitable for manure spreading trucks in general, and is constituted in such a manner as to easily break down or crumble the face of the pile of manure which is fed by the normal conveyor disposed on the base of the likewise normal manure spreading trucks.

It is well known that these latter are constituted essentially by a truck, on the base of which there is provided a conveyor of the slat type, designed to feed the manure pile in the direction of the front zone of the truck, towards a rotor which lies vertically and is disposed transversally to the longitudinal extension of said truck, and has its active or rear surface provided with a plurality of distribution blades. This rotor, which is suitably driven by a convenient mechanism deriving its motion from the power take-off of an agricultural tractor, is housed inside a cylindrical casing which is provided at the bottom with a lateral throwing mouth.

At the present time, a large number of manure spreading trucks are known, and all of them suffer from the great problem of the ability to crumble the face zone of the pile of manure which comes into contact with the central part of the rotor, i.e. that part of this latter which has the smallest peripheral speed.

One known solution is to provide, immediately upstream of the active face of the rotor, independent means, so as a vertically reciprocating rotating wheel, or an independently rotating bladed plate, to break the part of a manure face exposed to the central part of the rotor. Solutions are also known, e.g. from the GB—A—1205135 and US—A—2296474, consisting of profiled means on the rotor arranged to operate on the part of a manure face exposed to the central zone thereof. It is further known to provide a separately rotatably driven member associated with the rotor, e.g. from the US—A—2883196.

Said known and other analogous solutions have proved very delicate, in that they are subject to breakage due to foreign bodies present in the manure mass. They are of poor efficency and are very costly because of the need to provide an independent mechanical transmission for their drive.

The main object of the present invention is to provide an improved rotor suitable for any type of manure spreading truck, which by means of a simple and rational constructional design remedies the aforesaid defects. This is attained according to the invention by providing, at that zone of the rotor which has a low rotational speed, i.e. at its central zone, a profiled member arranged to crumble that part of the face of the manure pile which is destined to come into contact with said central zone of the rotor.

Furthermore, in order to involve the entire said face of the manure pile to be distributed, the invention comprises, concentrically to said central profiled member, sets of variously disposed or orientated elements rigid with the rotor distribution blades, and which are distributed along circumferences having different radii. More precisely, said profiled member is composed of three straight portions which, disposed in succession, assume an overall crank configuration with its end pointed. The member and elements are defined in claim 1.

In addition, said pointed end is inclined rearward relative to the direction of rotation of the rotor. In this manner, said profiled member penetrates into the approaching pile, and always manages to loosen any strings or filiform bodies present in the manure pile to be distributed. Finally, the elements disposed externally relative to said central profiled member are essentially constituted by flat fins or appendices which are variously orientated relative to the rotor distribution blades.

The objects and advantages of the invention, together with its operational characteristics and constructional merits, will be more apparent from the detailed description given hereinafter, with reference to the figures of the accompanying drawings in which:

Figure 1 is a perspective view of the improved rotor concerned;

Figure 2 is a front view of said improved rotor;

Figure 3 is a section on the line III—III of the preceding figure;

Figure 4 is a perspective view of the central profiled member with which the rotor is provided;

Figure 5 is a plan view of the prededing Figure 3.

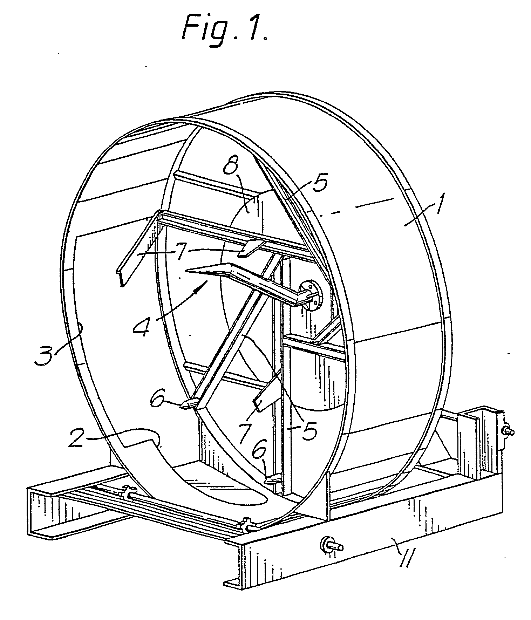

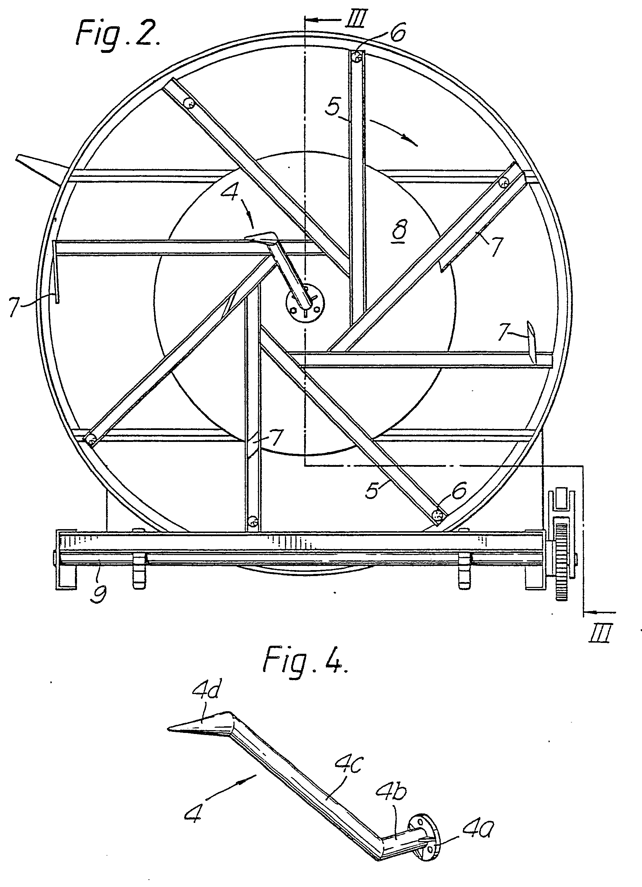

Said figures, and in particular Figures 1 and 2 taken together, show a cylindrical casing 1 with a central rotatable disc 8 provided at its rear mouth, i.e. at that mouth which normally faces the front of the corresponding manure spreading truck, and which is closed by a suitable base wall. The rear or active face of this disc is provided with a set of radially equidistant distribution blades 5, which as clearly shown are tangentially disposed relative to a circumference concentric to the longitudinal axis of the disc 8.

A pile of manure is fed to said distribution blades 5 by a normal slat conveyor disposed on the base of the relative manure spreading truck, and thus becomes exposed to said blades 5. Each of these latter is provided, at different points on its longitudinal extension, with projecting members which differ from each other and which are differently orientated both relative to the longitudinal dimension of their own blades 5 and relative to the transverse dimensions of this latter, and also relative to the direction of rotation of said distribution blade.

Those projecting members which are disposed in practice in the intermediate zones of each individual distribution blade 5 are each essentially constituted by a right or profiled

**0 030 045**

plate 7, the configuration, length and surface area of which vary relative to those of other similar members.

In contrast, those projections provided at the outer ends of each distribution blade 5 are each constituted by a cylindrical tooth 6 disposed orthogonally to its own blade 5, its free end being suitably tapered. Said teeth 6 (Figure 2) also occupy different positions relative to the ends of the blades 5. During rotation of the disc 8, all the projections 6 and 7 are designed to crumble or break down the face of the pile of manure which is fed towards the disc 8 and into the cylindrical casing 1. The distribution blades 5 throw the manure forcibly out of the cylindrical casing 1 through a lateral opening 3, which communicates at the bottom with a thowing mouth 2 which is disposed tangentially relative to the lower horizontal generating lines of the cylindrical casing 1.

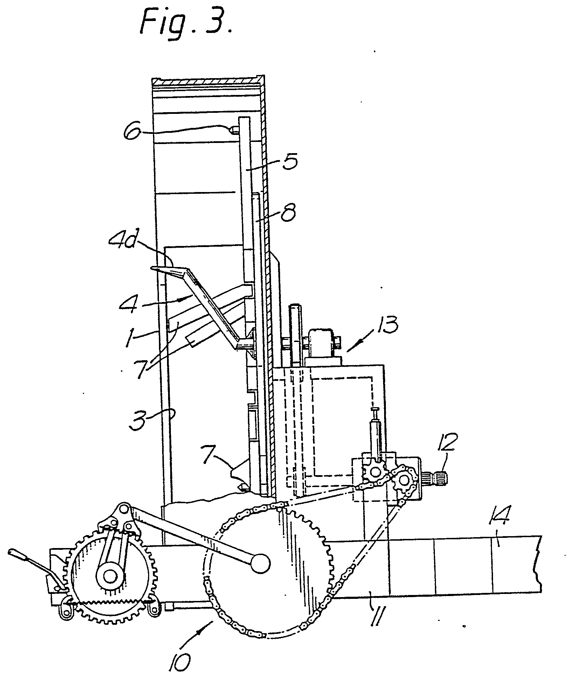

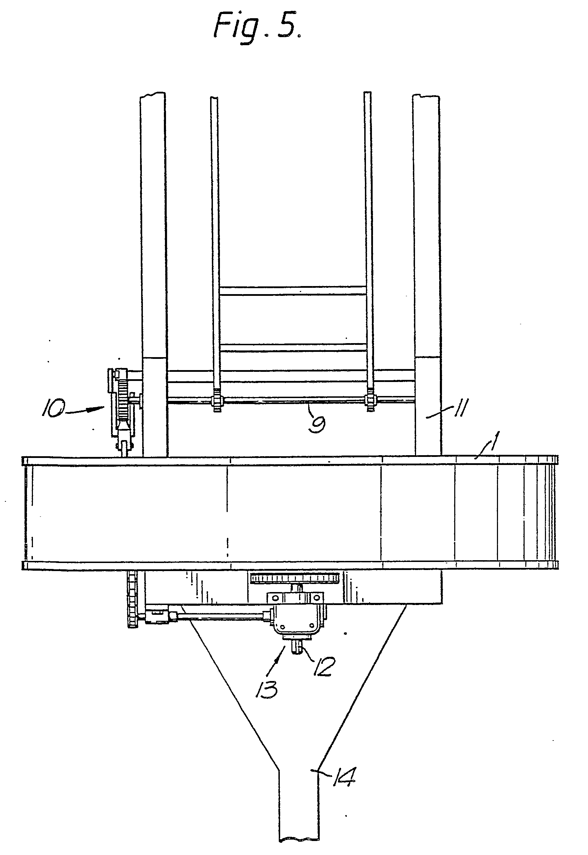

As shown in Figures 3 and 4, to the central point of the said active face of the disc 8 there is fixed a profiled member 4 which will be described specifically with reference to the accompanying Figure 4. This latter member consists of a connection flange 4a, from the central zone of which, and orthogonal thereto, there branches a first straight cylindrical portion 4b. From this latter there branches a second straight cylindrical portion 4c, the length of which is at least equal to three times the length of the first straight cylindrical portion 4b. The free end of the second straight cylindrical protion 4c is provided with a conical point 4d, the longitudinal axis of which is orientated other than in the common plane in which the straight cylindrical portions 4b and 4c lie. Furthermore, the inclination of the longitudinal axis of the conical point 4d to the longitudinal axis of the seond straight cylindrical portion 4c is equal to the inclination of the longitudinal axis of the second straight cylindrical portion 4c to the longitudinal axis of the first straight cylindrical portion 4b. Said inclination lies between 50° and 60°. In addition, the conical point 4d is inclined rearward relative to the direction of rotation of the disc 8. With reference to Figure 3, the overall length of the central profiled member 4 is slightly greater than the longitudinal extension of the cylindrical casing 1. Moreover, the overall length of said central profiled member 4 is also greater than that of any of the crumbling elements 6 and 7. The operation of the invention is apparent from the detailed description given heretofore.

It must also be stated that the improved rotor according to the invention, i.e. as heretofore described, is suitable for any type of manure spreading truck, because of which it is provided in the form shown in the accompanying Figures 3 and 5.

Before referring in particular to these latter figures, it must be stated that providing a rotor unit of this type is extremely advantageous in that it enables any eixsting manure spreading truck to be fitted with the present rotor without it being necessary to purchase a further truck or without complicated, long and costly work of adapting the existing manure spreading truck to the present invention being necessary.

The cylindrical casing 1 shown in Figures 3 and 5 is disposed on a base frame 11, from the front zone of which there branches a normal towing bar 14, this latter being designed for connection to the towing unit of a normal agricultural tractor.

To the side of the base frame 11 there is a normal mechanism 10, the purpose of which is to drive, halt or withdraw the slat conveyor designed to feed the pile of manure to the distribution roller.

Said mechanism 10 is driven by a control unit 13 from which the motion for the disc 8 of the rotor according to the invention is derived.

This control unit 13, of usual type, derives its motion from a splined shaft 12 which is connected by a suitable telescopic cardan shaft to the power take-off of the agricultural tractor which tows the corresponding manure spreading truck.

Finally, as clearly shown in the accompanying Figure 5, the rear zone of the base frame 11 is also provided with a horizontal shaft 9 driven by the mechanism 10, and designed to drive the slat conveyor of the manure spreading truck.

It must also be emphasised that during the operation of the invention, the central zone of the rotor is continuously covered by the central profiled member 4, which continuously breaks up that part of the face of the pile of manure which becomes exposed to the rotor central zone rotating at low speed.

In contrast, the outer zone of said face is crumbled by the elements 6 and 7.

Finally, it will be certainly apparent that the advantageous rearward inclination of the conical point 4d relative to the direction of rotation of the disc 8 enables the central profiled member 4 of the invention to even loosen those strings or filiform bodies present in the pile of manure, and which would otherwise tend to become entangled on said profiled member, so limiting its function.

**Claims**

1. A rotor for a manure spreading truck of the type comprising a casing disposed at one of the transverse vertical walls of the truck and provided internally with a bladed rotor having crumbling elements distributed on its blades, and a central profiled member (4) on its active face, extending beyond the free ends of said crumbling elements, characterised in that said central profiled member is composed of a plate (4a) connected to the central point of the rotor, a first straight cylindrical piece (4b) branching orthogonally from said plate, a second straight cylindrical piece (4c) inclined to said first piece and connected to the free end thereof, and a conically shaped point (4d) connected to the free end of the second piece, which is obliquely disposed to the common plane in which said first and second straight cylindrical pieces lie.

2. A rotor as claimed in the preceding claims, characterised in that said conical point (4d) is inclined rearwardly relative to the direction of rotation of the rotor.

3. A rotor as claimed in claim 1 and 2, characterised in that the angle between the longitudinal axes of said first and second straight cylindrical piece is equal to the angle between the longitudinal axes of said second straight cylindrical piece and said conical point.

4. A rotor as claimed in claims 1 and 2, characterised in that said angle is 50 to 60°.

5. A rotor as claimed in the preceding claims, characterised in that said conical point of the central profiled member extends beyond the rear mouth of the casing.

## Revendications

1. Un rotor pour un engin épandeur de fumier du type comprenant un carter disposé à l'une des parois verticales transversales de l'engin et pourvu intérieurement avec un rotor à lames comportant des éléments de désagrégement distribués sur lesdites lames, et un organe profilé central (4) sur sa face active s'étendant au-delà des extrémités libres desdits éléments de désagrégement, caractérisé en ce que ledit organe profilé central est composé d'une plaque 4a connectée au point central du rotor, une première pièce 4b cylindrique droite s'élevant orthogonalement à partir de ladite plaque, d'une seconde pièce 4c cylindrique droite inclinée par rapport à ladite première pièce et connectée à l'extrémité libre de cette partie, et d'une pointe formée coniquement 4d connectée à l'extrémité libre de la seconde pièce, et qui est obliquement disposée par rapport au plan commun dans lequel sont situées la première et la seconde pièces cylindriques droites.

2. Un rotor selon la revendication précédente caractérisé en ce que ladite pointe conique 4d est inclinée en arrière par rapport à la direction de rotation du rotor.

3. Un rotor selon la revendication 1 et 2 caractérisé en ce que l'angle formé entre les axes longitudinaux desdites première et seconde pièces cylindriques droites est égal à l'angle formé entre les axes longitudinaux de ladite seconde pièce cylindrique droite et de ladite pointe cònique.

4. Un rotor selon la revendication 1 et la revendication 2 caractérisé en ce que ledit angle est compris entre 50° et 60°.

5. Un rotor selon l'une des revendications précédentes caractérisé en ce que ladite pointe conique dudit organe profilé central s'étend au-delà de l'embouchure arrière du carter.

## Parentansprüche

1. Rotor für ein Miststreuergestell mit einem Gehäuse, wobei der Rotor an einem der querverlaufenden vertikalen Wände des Gestelles angeordnet ist und im Inneren des Gehäuses der mit flügel versehene Rotor liegt, der auf seinen flügeln verteilt Aufschlagelemente besitzt, und mit einem zentralen profilierten Glied auf seiner Wirkfläche, das sich über die freien Enden der genannten Aufschlagelemente hinaus erstreckt, dadurch gekennzeichnet, daß das zentrale profilierte Glied aus einer Platte (4a), die mit dem Mittelpunkt des Rotares verbunden ist, einem ersten geraden zylindrischen Abschnitt (4b), der rechtwinklig von der genannten Platte abzweigt, einem zweiten geraden zylindrischen Abschnitt (4c), der zu dem ersten Abschnitt geneigt und mit dessen freien Ende verbunden ist, und einer konisch geformten Spitze, die mit dem freien Ende des zweiten Abschnittes verbunden ist und die zu der gemeinsamen Ebene, in der die genannten ersten und zweiten geraden zylindrischen Abschnitte liegen, schräg verlaufend angeordnet ist, gebildet ist.

2. Rotor nach Anspruch 1, dadurch gekennzeichnet, daß die konische Spitze (4d) relativ zu der Drehrichtung des Rotores nach hinten geneigt ist.

3. Rotor nach Anspruch 1 und 2, dadurch gekennzeichnet, daß der Winkel zwischen den Längsachsen des ersten und des zweiten geraden zylindrischen Abschnittes gleich groß ist wie der Winkel zwischen den Längsachsen des zweiten geraden zylindrischen Abschnittes und deren konischer Spitze.

4. Rotor nach Anspruch 2 und 3, dadurch gekennzeichnet, daß der Winkel zwischen 50 und 60° beträgt.

5. Rotor nach einem der vorstehenden Ansprüche, dadurch gekennzeichnet, daß sich die konische Spitze des zentralen profilierten Gliedes über die hintere Öffnung des Gehäuses hinauserstreckt.

**0 030 045**

*Fig. 1.*

Fig. 2.

5

6

4

8

7

7

7

7

5

6

9

Fig. 4.

4d

4c

4b

4

4a

2

Fig. 3.

0 030 045

Fig. 5.

4